Europäisches Patentamt

**European Patent Office**

**Office européen des brevets**

(11) Numéro de publication : **0 093 683**
**B1**

# FASCICULE DE BREVET EUROPÉEN

(45) Date de publication du fascicule du brevet :
**30.07.86**

(21) Numéro de dépôt : **83440027.7**

(22) Date de dépôt : **03.05.83**

(51) Int. Cl.⁴ : **A 01 D 78/10, A 01 D 57/26**

(54) **Perfectionnement aux machines agricoles pour déplacer du fourrage ou d'autres végétaux se trouvant sur le sol.**

(30) Priorité : **05.05.82 FR 8207933**

(43) Date de publication de la demande :
**09.11.83 Bulletin 83/45**

(45) Mention de la délivrance du brevet :
**30.07.86 Bulletin 86/31**

(84) Etats contractants désignés :
**AT DE GB NL**

(56) Documents cités :
**DE-A- 2 928 494**
**GB-A- 1 100 764**
**GB-A- 2 005 523**

(73) Titulaire : **BELRECOLT S.A.**
**3, Zone Industrielle**
**F-67440 Marmoutier (FR)**

(72) Inventeur : **Quirin, Michel**
**29, rue de la Bergerie Allenwiller**
**F-67310 Wasselonne (FR)**

(74) Mandataire : **Andres, Jean-Claude**
**BELRECOLT S.A. 3, Zone Industrielle**
**F-67440 Marmoutier (FR)**

Jouve, 18, rue St-Denis, 75001 Paris, France

## Description

La présente invention concerne les machines agricoles pour l'andainage, comportant un châssis support de forme allongée, portant plusieurs tambours ou des dispositifs analogues, entraînés en rotation dans le même sens autour d'axes sensiblement verticaux ou légèrement inclinés, chacun desdits tambours étant pourvu à sa partie inférieure d'une jupe souple permettant de ramasser et de déplacer latéralement du fourrage ou d'autres végétaux se trouvant sur le sol.

Sur les machines de ce genre les tambours sont généralement décalés l'un par rapport à l'autre vers l'arrière. Cette disposition favorise la transmission du fourrage d'un tambour à l'autre en vue de la formation d'un andain latéral. Toutefois le fourrage de petites dimensions passe souvent dans l'intervalle entre deux tambours voisins. Ce fourrage retombe alors sur le sol à l'arrière de la machine, ce qui donne lieu à des pertes. Celles-ci sont assez importantes lors de la deuxième coupe vu que l'herbe est alors relativement courte. De même, les feuilles ou d'autres particules qui peuvent se détacher des tiges, passent fréquemment entre les tambours.

La demande de brevet GB-A-2 005 523 se rapporte à une machine du genre de celle décrite ci-dessus. Sur cette machine, un déflecteur en forme de V est disposé entre les tambours adjacents en vue de favoriser le passage d'un tambour à l'autre des produits déplacés. Cependant, l'efficacité de ce déflecteur n'est pas totale. En effet, étant donné que les jupes des tambours sont souples, l'écart entre le déflecteur et ces jupes varie durant le travail. Ainsi, chaque fois que cet écart augmente, les produits peuvent passer vers le côté arrière des tambours et se perdre derrière la machine. De plus, vu que les parois des tambours sont généralement pourvues d'entraîneurs, il est nécessaire de laisser une ouverture entre le déflecteur et lesdites parois pour le passage de ces entraîneurs. Les produits déplacés peuvent donc s'engager dans cette ouverture et soit s'y accumuler et provoquer des bourrages, soit passer vers le côté arrière de la machine et se perdre.

La présente invention a notamment pour but d'éviter ces pertes de fourrage entre les tambours qui tournent dans le même sens.

A cet effet, une importante caractéristique de l'invention consiste en ce que des déflecteurs sont disposés sur le côté arrière des tambours — vu dans le sens d'avancement de la machine — et entourent partiellement au moins la partie inférieure de ces tambours, ces déflecteurs coopérant avec lesdits tambours en vue de créer des courants d'air dirigés vers l'avant à partir dudit côté arrière des tambours dans les intervalles entre les tambours voisins. Ces courants d'air s'opposent au passage de fourrage vers le côté arrière de la machine. Ils sont efficaces jusqu'aux parois des tambours et jusqu'à la face supérieure des jupes quelle que soit la position de ces dernières. Ledit fourrage est ainsi maintenu sur le côté avant de la machine et est intégralement déposé sous la forme d'un andain latéralement aux tambours qui tournent dans le même sens.

La hauteur de ces déflecteurs est de préférence au moins égale au quart de la hauteur des tambours. Les courants d'air ainsi obtenus se situent au niveau des moyens pour déplacer le fourrage et de la base des tambours, c'est-à-dire là où est transportée la plus grande masse de fourrage.

Lesdits déflecteurs peuvent être concentriques aux tambours. Néanmoins, ils peuvent également être disposés en forme de spirales autour des tambours en vue d'obtenir une augmentation du volume d'air déplacé.

Ils se situent de préférence à proximité des moyens pour déplacer le fourrage, leur bord inférieur épousant sensiblement le profil desdits moyens. Cette caractéristique permet de mieux canaliser les courants d'air afin d'augmenter leur puissance.

Selon une autre caractéristique de l'invention, les déflecteurs sont reliés entre eux et forment un écran continu s'étendant d'un tambour extrême à l'autre. Ainsi le fourrage passant tout de même sur le côté arrière des tambours est arrêté par cet écran et est ramené vers l'avant par les courants d'air précités. Dans ce cas, les déflecteurs entourent avantageusement les tambours intermédiaires pratiquement sur la moitié de leur circonférence. Cet agencement permet d'obtenir des courants d'air d'une bonne puissance.

Les déflecteurs selon l'invention peuvent être constitués par deux parties courbes reliées entre elles par une partie plane. Chacune de ces parties courbes entoure un tambour sur environ un quart de sa circonférence. Les déflecteurs ainsi formés sont peu encombrants et faciles à réaliser.

D'autres caractéristiques et avantages de l'invention ressortiront de la description ci-après, avec référence aux dessins annexés, lesquels représentent à titre d'exemples non limitatifs quelques formes de réalisation de l'invention.

Dans ces dessins :

La figure 1 représente une vue d'ensemble d'une machine selon l'invention,

La figure 2 représente une vue de dessus de la machine selon la figure 1,

La figure 3 représente à plus grande échelle une coupe suivant le plan III-III de la figure 2,

La figure 4 représente une vue de dessus d'un autre exemple de réalisation,

La figure 5 représente également une vue de dessus d'un autre exemple de réalisation,

La figure 6 représente une vue de face d'un déflecteur selon l'invention,

La figure 7 représente une coupe suivant le plan VII-VII de la figure 6,

La figure 8 représente une coupe suivant le plan VIII-VIII de la figure 6,

La figure 9 représente un exemple de montage des déflecteurs sur le châssis de la machine.

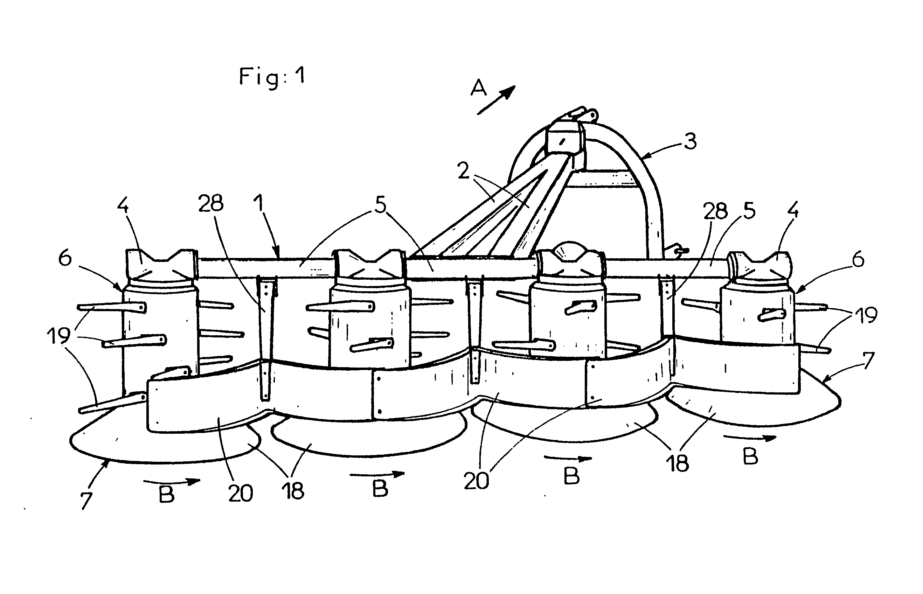

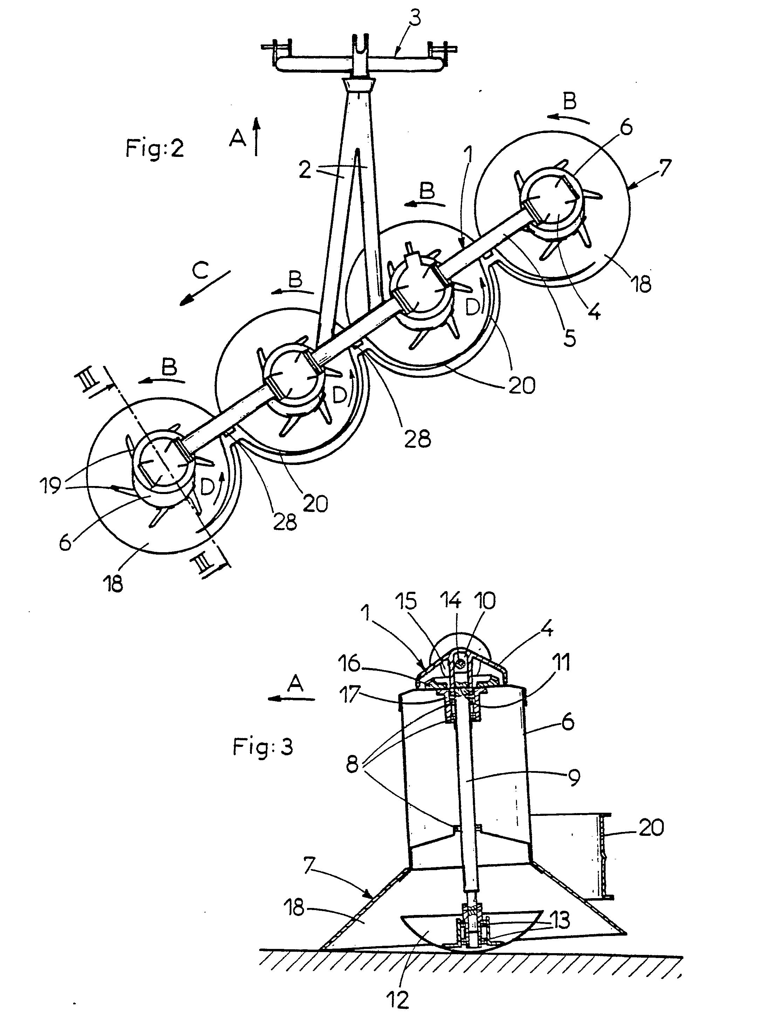

Telle qu'elle est représentée sur les figures 1 et 2, la machine selon l'invention comprend un châssis support (1) de forme allongée. A ce châssis sont reliées deux poutres (2) disposées en forme de V, sur lesquelles est articulé un chevalet d'attelage trois points (3). Celui-ci permet l'accouplement de la machine à un tracteur d'entraînement non représenté.

Ledit châssis (1) est constitué par quatre boîtiers (4) reliés entre eux au moyen de tubes (5). Il est en sus muni de quatre tambours (6) pourvus de moyens (7) en vue de déplacer du fourrage ou d'autres végétaux se trouvant sur le sol. Sur la figure 3 on voit que ces tambours (6) sont montés au moyen de roulements à billes (8) sur des axes (9) solidaires du châssis (1). A cet effet, ces axes (9) sont engagés dans des logements (10) prévus dans les boîtiers (4) dudit châssis et y sont immobilisés au moyen de goupilles (11). D'autre part, chacun de ces axes (9) porte à sa partie inférieure un patin (12) servant d'appui à la machine lorsqu'elle est déplacée ou déposée sur le sol. Ces patins (12) sont montés sur les axes (9) au moyen de roulements à billes (13) afin de pouvoir tourner librement autour desdits axes. Ce montage facilite le déplacement de la machine sur le sol.

Dans la position de travail telle que représentée sur les figures 1 et 2, le châssis support (1) est disposé obliquement par rapport à la direction d'avancement indiquée par la flèche (A). Cette disposition favorise la transmission du fourrage d'un tambour à l'autre en vue de la réalisation d'un andain latéral.

Durant le travail les quatre tambours (6) sont entraînés en rotation autour des axes (9) dans le sens indiqué par les flèches (B). Cet entraînement est réalisé au moyen d'un arbre (14) logé dans le châssis support (1). Pour cela cet arbre (14) comporte dans chaque boîtier (4) un pignon (15) qui coopère avec une couronne dentée (16) solidaire du moyeu (17) du tambour (6) correspondant (voir figure 3). Ledit arbre (14) est lui-même entraîné d'une manière connue en soi à partir de l'arbre de prise de force du tracteur d'entraînement.

Les moyens (7) sont constitués par une jupe souple et déformable (18) située à la partie inférieure de chaque tambour (6). Ces jupes (18) peuvent être en caoutchouc, en matière plastique ou une autre matière analogue. La fixation de ces jupes (18) sur les tambours (6) peut être réalisée au moyen de rivets. Durant le travail elles plongent sous le fourrage à déplacer tout en épousant bien les dénivellations du sol et, transportent le fourrage sur leur face supérieure. Ce fourrage est transmis d'un tambour à l'autre dans le sens de la flèche (C) et est déposé latéralement à la machine sous la forme d'un andain. Ladite transmission est améliorée à l'aide d'entraîneurs (19) fixés sur les parois des tambours (6). Le fourrage andainé peut alors être ramassé par exemple au moyen d'une presse, d'une ensileuse ou d'une remorque autochargeuse.

Les axes de rotation (9) des tambours (6) peuvent être sensiblement verticaux ou légèrement inclinés vers l'avant, dans la direction du sens d'avancement (A) de la machine. Cette inclinaison permet d'avoir un meilleur contact des jupes (18) avec le sol dans la partie la plus avancée de leur trajectoire, ce qui favorise le ramassage du fourrage.

Conformément à une importante caractéristique de l'invention, des déflecteurs (20) qui entourent partiellement au moins la partie inférieure des tambours (6), sont disposés sur le côté arrière de ces derniers. Ces déflecteurs (20) coopèrent avec lesdits tambours en vue de créer des courants d'air dirigés vers l'avant suivant les flèches (D) dans les intervalles entre les tambours (6). Ces courants d'air sont provoqués par la rotation des tambours (6) et de leurs entraîneurs (19). Les déflecteurs (20) permettent de les canaliser et de les guider de telle sorte qu'ils s'opposent au passage de fourrage entre les tambours (6). L'action de ces courants d'air est également efficace au niveau des entraîneurs (19). Ils dégagent le fourrage accroché à ces entraîneurs (19) et évitent le passage de fourrage avec ces derniers vers le côté arrière de la machine.

Lesdits déflecteurs (20) ont une hauteur qui est au moins égale au quart de la hauteur des tambours (6). Par ailleurs, les bords inférieurs de ces déflecteurs (20) se situent près des jupes (18) des tambours (6). Les courants d'air effleurent ainsi ces jupes (18) et décollent le fourrage de leur face supérieure.

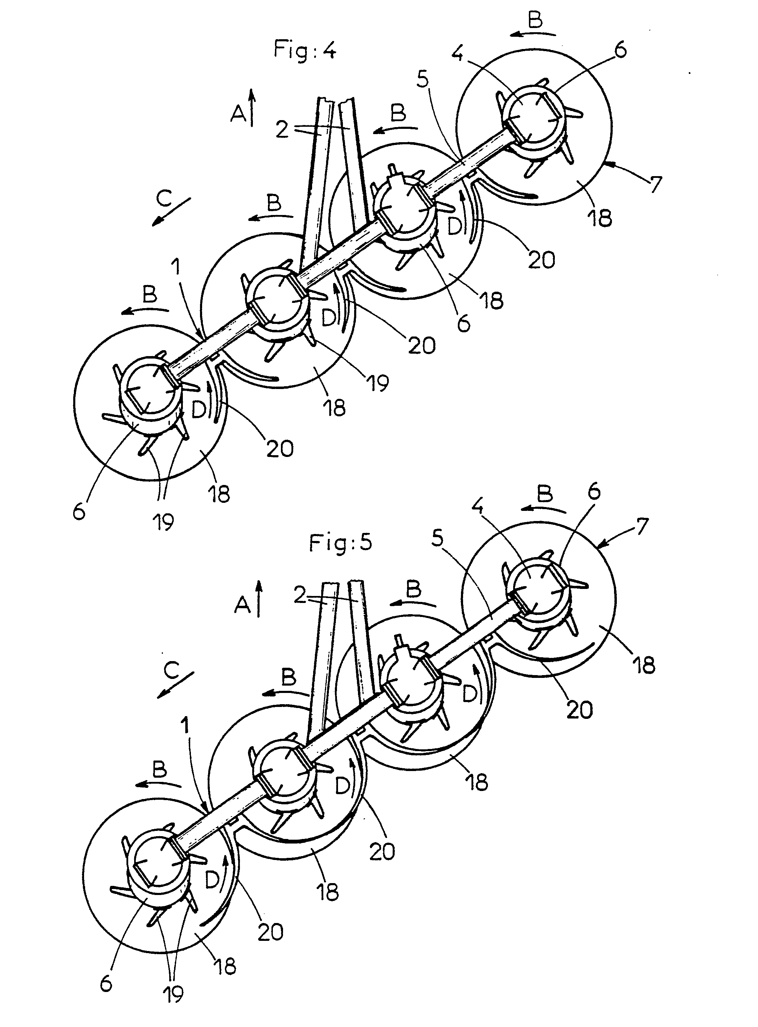

Dans l'exemple représenté sur la figure 4 les déflecteurs (20) entourent partiellement les tambours (6). Dans les exemples des figures 1, 2 et 5, les déflecteurs (20) sont reliés entre eux et forment un écran continu s'étendant d'un tambour extrême à l'autre. Ils entourent les tambours (6) intermédiaires sensiblement sur la moitié de leur circonférence afin d'augmenter la puissance des courants d'air. Le tambour (6) le plus proche de l'andain en formation est entouré par un déflecteur (20) sensiblement sur un quart de sa circonférence. On obtient ainsi un bon courant d'air entre ce tambour extrême et le tambour voisin tout en dégageant la place nécessaire pour la formation de l'andain. D'autre part, le tambour (6) situé à l'extrémité opposée du châssis (1) peut être partiellement entouré par un déflecteur (20) comme cela est représenté sur les dessins annexés. On pourrait éventuellement ne pas prévoir de déflecteur (20) pour ce tambour, vu que le risque de passage de fourrage sur son côté extérieur est minime.

Lesdits déflecteurs (20) peuvent être concentriques aux tambours (6). Dans ce cas ils sont assez rapprochés des entraîneurs (19). Dans l'exemple de la figure 5, les déflecteurs (20) sont disposés en forme de spirales autour des tambours (6). Vu dans le sens de rotation (B) des tambours (6), ils débutent très près des entraîneurs (19) du tambour (6) correspondant et s'en éloignent progressivement. Avec cette disposition on augmente le volume de l'air déplacé.

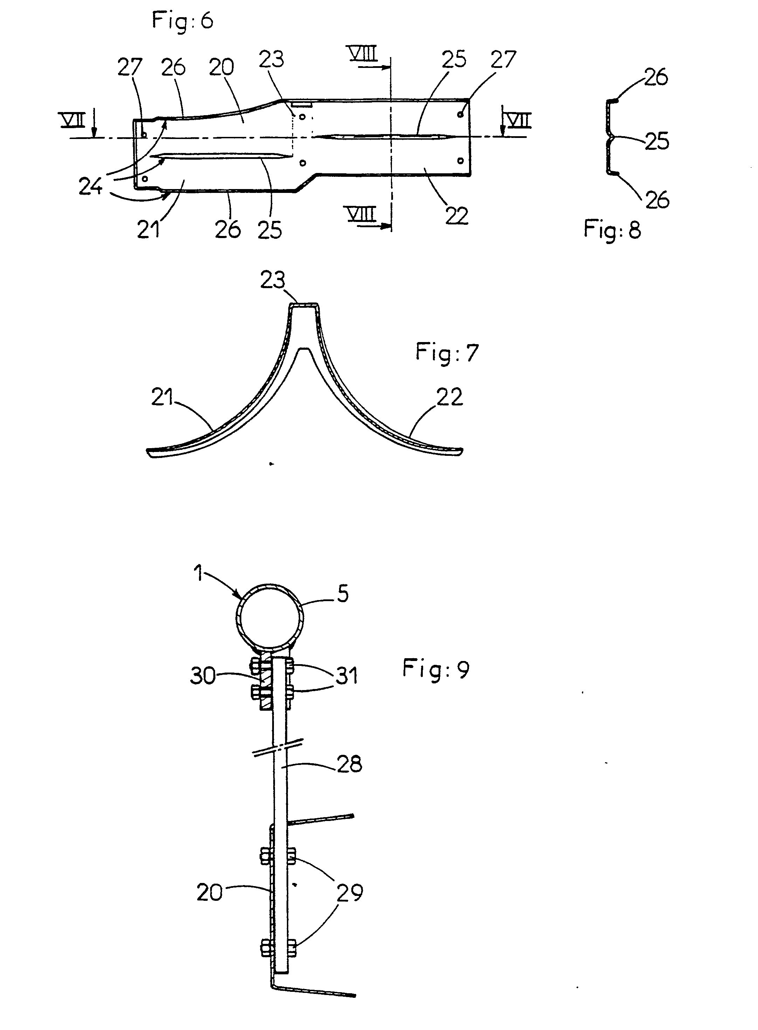

Comme cela ressort des figures 6, 7 et 8, chaque déflecteur (20) est constitué par deux parties courbes (21 et 22) sensiblement en forme d'un quart de cercle, qui sont reliées entre elles par une partie droite (23). Leur bord inférieur est découpé de manière à s'adapter au profil des jupes (18) des tambours (6). Ces déflecteurs (20) peuvent être réalisés en tôle ou en matière plastique. Dans ce cas, on peut par exemple choisir du polyester armé de fibres de verre afin d'augmenter la résistance. En sus, ces déflecteurs (20) comportent des renforts (24) constitués par une nervure médiane (25) et des prolongements sensiblement horizontaux (26) de leur bord supérieur et inférieur. A chaque extrémité, ces déflecteurs (20) comportent des orifices (27) pour le passage de moyens tels des boulons en vue de les relier entre eux. Les déflecteurs (20) en matière plastique sont légers et faciles à réaliser malgré la présence des renforts (24).

Ces déflecteurs (20) sont reliés au châssis support (1) de la machine au moyen de bras (28) (voir figures 1 et 9). Ces bras (28) sont fixés aux déflecteurs (20) par des boulons (29). La partie supérieure de chaque bras (28) est engagée dans un logement (30) en forme de U qui est soudé sur le châssis (1). Lesdits bras sont immobilisés dans ces logements (30) au moyen de boulons (31). Ce mode d'assemblage permet de démonter rapidement ces déflecteurs (20) par exemple lorsque leur présence n'est pas nécessaire ou pour les remplacer par des déflecteurs de forme différente.

**Revendications**

1. Machine agricole pour l'andainage comportant un châssis support (1) de forme allongée qui est disposé transversalement à la direction d'avancement (A), lequel châssis porte plusieurs tambours (6) entraînés en rotation dans le même sens autour d'axes (9) sensiblement verticaux ou légèrement inclinés, chacun desdits tambours étant pourvu à sa partie inférieure d'une jupe souple (18) permettant de ramasser et de déplacer latéralement du fourrage ou d'autres végétaux se trouvant sur le sol et ledit châssis supportant aussi des déflecteurs (20) favorisant le passage du fourrage d'un tambour à l'autre en vue de la formation d'un andain latéralement aux tambours tournant dans le même sens, caractérisée par le fait que ces déflecteurs (20) sont disposés sur le côté arrière des tambours (6) — vu dans le sens d'avancement (A) de la machine — et entourent partiellement au moins la partie inférieure de ces tambours (6), ces déflecteurs (20) coopérant avec lesdits tambours en vue de créer des courants d'air dirigés vers l'avant (directions D) à partir dudit côté arrière des tambours (6) dans les intervalles entre les tambours (6) voisins.

2. Machine selon la revendication 1, caractérisée par le fait que la hauteur des déflecteurs (20) est au moins égale au quart de la hauteur des tambours (6).

3. Machine selon la revendication 1 ou 2, caractérisée par le fait que les déflecteurs (20) sont reliés entre eux et forment un écran continu s'étendant d'un tambour extrême à l'autre.

4. Machine selon l'une quelconque des revendications précédentes, caractérisée par le fait que les bords inférieurs des déflecteurs (20) se situent à proximité des jupes (18) des tambours (6).

5. Machine selon l'une quelconque des revendications précédentes, caractérisée par le fait que les déflecteurs (20) entourent les tambours (6) intermédiaires, sensiblement sur la moitié de leur circonférence.

6. Machine selon l'une quelconque des revendications 1 à 4, caractérisée par le fait que le tambour (6) le plus proche de l'andain en formation, est entouré par un déflecteur (20) sensiblement sur un quart de sa circonférence.

7. Machine selon l'une quelconque des revendications précédentes, caractérisée par le fait que les déflecteurs (20) sont concentriques aux tambours (6).

8. Machine selon l'une quelconque des revendications 1 à 6, caractérisée par le fait que les déflecteurs (20) sont disposés en forme de spirales autour des tambours (6).

9. Machine selon l'une quelconque des revendications précédentes, caractérisée par le fait que chaque déflecteur (20) est constitué par deux parties courbes (21, 22) sensiblement en forme d'un quart de cercle, ces deux parties étant reliées entre elles par une partie droite (23).

10. Machine selon l'une quelconque des revendications précédentes, caractérisée par le fait que les déflecteurs (20) sont reliés au châssis support (1) de la machine.

11. Machine selon l'une quelconque des revendications précédentes, caractérisée par le fait que les déflecteurs (20) sont en tôle.

12. Machine selon l'une quelconque des revendications 1 à 10, caractérisée par le fait que les déflecteurs (20) sont en matière plastique.

13. Machine selon la revendication 12, caractérisée par le fait que les déflecteurs (20) sont en polyester armé de fibres de verre.

14. Machine selon la revendication 11 ou 12, caractérisée par le fait que les déflecteurs (20) comportent des renforts (24).

15. Machine selon la revendication 14, caractérisée par le fait que les renforts (24) sont constitués par une nervure médiane (25).

16. Machine selon la revendication 14, caractérisée par le fait que les renforts (24) sont constitués par des prolongements sensiblement horizontaux (26) des bords supérieurs et inférieurs des déflecteurs (20).

**Claims**

1. Agricultural machine for windrowing comprising a frame support (1) of elongated form which is situated transversally to the forward direction (A), which frame has several drums (6) powered in rotation in the same direction around the axes (9), substantially vertical or slightly inclined, each of the said drums being equipped with a supple skirt (18) on its lower part for the pick up and lateral movement of crops or other vegetation being on the ground and the said frame also supporting deflectors (20) favoring the passage of the crops from one drum to another in view of the formation of a windrow laterally to the drums turning in the same direction, characterized in that these deflectors (20) are situated on the rear side of the drums (6) — seen in the forward direction (A) of the machine — and partially surround at least the lower part of these drums (6), these deflectors (20) cooperating with the said drums in view of creating air currents directed towards the front (directions D) from the said rear side of the drums (6) in the intervales between the neighboring drums (6).

2. Machine as defined in claim 1, characterized in that the height of the deflectors (20) is at least equal to one fourth of the height of the drums (6).

3. Machine as defined in claim 1 or 2, characterized in that the deflectors (20) are linked together and form a continuous screen extending to the drums at both extremities.

4. Machine as defined in any one of the preceding claims, characterized in that the lower edges of the deflectors (20) are situated near the skirts (18) of the drums (6).

5. Machine as defined in any one of the preceding claims, characterized in that the deflectors (20) surround the intermediary drums (6) on approximately half their circumference.

6. Machine as defined in any one of claims 1 to 4, characterized in that the drum (6) nearest the windrow being formed, is surrounded by a deflector (20) on approximately one fourth of its circumference.

7. Machine as defined in any one of the preceding claims, characterized in that the deflectors (20) are concentric to the drums (6).

8. Machine as defined in any one of claims 1 to 6, characterized in that the deflectors (20) are arranged in a spiral shape around the drums (6).

9. Machine as defined in any one of the preceding claims, characterized in that each deflector (20) is made up of two curved parts (21, 22) substantially shaped in one fourth of a circle, these two parts being linked together by a straight part (23).

10. Machine as defined in any one of the preceding claims, characterized in that the deflectors (20) are linked to the frame support (1) of the machine.

11. Machine as defined in any one of the preceding claims, characterized in that the deflectors (20) are made of steel plate.

12. Machine as defined in any one of claims 1 to 10, characterized in that the deflectors (20) are made of plastic matter.

13. Machine as defined in claim 12, characterized in that the deflectors (20) are made of fiber glass polyester.

14. Machine as defined in claim 11 or 12, characterized in that the deflectors (20) have reinforcements (24).

15. Machine as defined in claim 14, characterized in that the reinforcements (24) are made up of a median rib (25).

16. Machine as defined in claim 14, characterized in that the reinforcements (24) are made up of substantially horizontal prolongations (26) of the upper and lower edges of the deflectors (20).

## Patentansprüche

1. Landmaschine, insbesondere zum Schwaden, mit einem langgestreckten Tragrahmen (1), der quer zur Fahrtrichtung (A) gerichtet ist, welcher Tragrahmen (1) mehrere Trommeln (6) trägt, die um annähernd senkrechte oder leicht geneigte Achsen (9) rotierend angetrieben werden, wobei jede dieser Trommeln an ihrem unteren Teil einen geschmeidigen Ringkragen (18) trägt, der das Aufnehmen und das seitliche Versetzen des sich auf dem Boden befindlichen Futters oder anderes Gewächs ermöglicht und wobei der Tragrahmen (1) auch Abweiser (20) trägt, die den Übergang des Futters von einer Trommel zu der anderen begünstigen zum Zwecke der Bildung eines Schwads seitlich der sich in die gleiche Richtung drehenden Trommeln, dadurch gekennzeichnet, dass diese Abweiser (20) auf der hinteren Seite der Trommeln (6) angeordnet sind — in Fahrtrichtung (A) der Maschine gesehen — und teilweise mindestens der untere Teil der Trommeln (6) umgeben, wobei diese Abweiser (20) mit diesen Trommeln kooperieren zum Zwecke Luftströme zu bilden, die von der hinteren Seite der Trommeln (6) nach vorne (Richtungen D) in die Raüme zwischen den benachbarten Trommeln (6) gerichtet sind.

2. Maschine nach Anspruch 1, dadurch gekennzeichnet, dass die höhe der Abweiser (20) mindestens ein Viertel der Höhe der Trommeln (6) beträgt.

3. Maschine nach Anspruch 1 oder 2, dadurch gekennzeichnet, dass die Abweiser (20) miteinander verbunden sind und eine ununterbrochene Abschirmfläche bilden, die sich von der einen aussenliegenden Trommel zu der anderen erstreckt.

4. Maschine nach irgendeinem der vorherstehenden Ansprüche, dadurch gekennzeichnet, dass die unteren Ränder der Abweiser (20) sich in der Nähe der Ringkragen (18) der Trommeln (6) befinden.

5. Maschine nach irgendeinem der vorherstehenden Ansprüche, dadurch gekennzeichnet, dass die Abweiser (20) die innenliegenden Trommeln (6) ungefähr die Hälfte ihres Umfangs umgeben.

6. Maschine nach irgendeinem der Ansprüche 1 bis 4, dadurch gekennzeichnet, dass die Trommel (6) die dem zu bildenden Schwad am nächsten liegt, von einem Abweiser (20) auf ungefähr ein Viertel ihres Umfangs umgeben ist.

7. Maschine nach irgendeinem der vorherstehenden Ansprüche, dadurch gekennzeichnet, dass die Abweiser (20) konzentrisch zu den Trommeln (6) angeordnet sind.

8. Maschine nach irgendeinem der Ansprüche 1 bis 6, dadurch gekennzeichnet, dass die Abweiser (20) spiralförmig um die Trommeln (6) angeordnet sind.

9. Maschine nach irgendeinem der vorherstehenden Ansprüche, dadurch gekennzeichnet, dass jeder Abweiser (20) aus zwei gebogenen Teilen (21, 22) besteht, wobei die Form jedes Teiles annähernd dem Viertel eines Kreisumfangs entspricht und wobei die zwei Teile durch ein gerades Teil (23) miteinander verbunden sind.

10. Maschine nach irgendeinem der vorherstehenden Ansprüche, dadurch gekennzeichnet, dass die Abweiser (20) mit dem Tragrahmen (1) der Maschine verbunden sind.

11. Maschine nach irgendeinem der vorherstehenden Ansprüche, dadurch gekennzeichnet, dass die Abweiser (20) aus Blech sind.

12. Maschine nach irgendeinem der Ansprüche 1 bis 10, dadurch gekennzeichnet, dass die Abweiser (20) aus Kunststoff sind.

13. Maschine nach Anspruch 12, dadurch gekennzeichnet, dass die Abweiser (20) aus glasfaserverstärkten Polyester sind.

14. Maschine nach Anspruch 11 oder 12, dadurch gekennzeichnet, dass die Abweiser (20) Verstärkungen (24) besitzen.

15. Maschine nach Anspruch 14, dadurch gekennzeichnet, dass die Verstärkungen (24) aus einer sich in der Mitte befindlichen Rippe (25) bestehen.

16. Maschine nach Anspruch 14, dadurch gekennzeichnet, dass die Verstärkungen (24) aus nahezu horizontalen Verlängerungen (26) der oberen und unteren Ränder der Abweiser (20) bestehen.

Fig:1

0 093 683

Fig: 2

Fig: 3

0 093 683

Fig: 4

Fig: 5

3

Fig: 6

27  26  20  23  VIII  25  27

VII

24

21  26  25  22

VIII

26

25

26

Fig: 8

23

21  22

Fig: 7

1

5

30  31  Fig: 9

28

20  29